# EUROPÄISCHE PATENTSCHRIFT

(11) **EP 0 697 539 B1**
(45) Veröffentlichungstag und Bekanntmachung des Hinweises auf die Patenterteilung: **07.04.1999**
(21) Anmeldenummer: 95111211.9
(22) Anmeldetag: 18.07.1995
(51) Int. Cl.: F16F 7/09, F16F 9/32

(54) **Reibungsdämpfer**
Friction damper
Amortisseur à friction

(30) Priorität: 02.08.1994 DE 4427336
(43) Veröffentlichungstag der Anmeldung: 21.02.1996
(73) Patentinhaber: AWECO Kunststofftechnik Gerätebau GmbH & Co. KG, 88099 Neukirch (DE)
(72) Erfinder: Hecht, Josef, D-88486 Kirchberg 1 (DE); Dillmann, Gerold, D-88239 Wangen im Allgäu (DE); Jaag, Dieter, D-88353 Kisslegg (DE)
(74) Vertreter: Patentanwälte Eisele, Otten, Roth & Dobler

(56) Entgegenhaltungen:
- EP-A- 0 481 144
- WO-A-95/16813
- CH-A- 467 423
- DE-A- 3 438 348
- DE-A- 3 908 191
- FR-A- 1 039 552
- FR-A- 1 088 217
- FR-A- 1 167 999
- FR-A- 2 079 874
- FR-A- 2 215 557
- LU-A- 54 854
- US-A- 3 861 717

## Beschreibung

Die Erfindung betrifft einen Reibungsdämpfer mit einem Gehäuse, in dem Reibflächen für einen Reibbelag eines Stößels bestehen und an dem ein Befestigungsauge vorgesehen ist.

In der DE 40 14 166 A1 ist ein Reibungsdämpfer beschrieben. Als Gehäuse ist ein Rohr vorgesehen, an dem das Befestigungsauge als separates Teil angeordnet ist. Es ist angegeben, daß als Führungskörper für den Stößel auch parallele Platten vorgesehen sein können. Im Stößel sind Spreizfedern angeordnet.

Eine besondere Lagereinrichtung für einen Reibungsdämpfer ist in der älteren Patentanmeldung P 43 20 232 angegeben. Mit dieser ist das Gehäuse auf einfache Weise lagerbar.

Die DE 39 08 191 A1 zeigt einen Reibungsdämpfer mit einem zweiteiligen Gehäuse. Der Reibbelag des Stößels liegt zwischen zwei Blattfederstreifen, die im Gehäuse angeordnet sind. Durch die Gestaltung des Gehäuses sind die wirksamen Reibungskräfte nicht zu beeinflussen.

Aus der LU - A - 54 854 (D1) ist eine Reibungsdämpferanordnung bekannt, bei der ein aus 2 Teilen bestehendes Gehäuse mit Reibungsflächen für den Stößel versehen ist. Die Reibungsflächen sind am einem Gehäuseteil unmittelbar an derGehäusewandung angeordnet, an der anderen Gehäusehälfte über eine Druckfeder am Gehäuse abgestützt. Die gewünschte Andruckkraft des Reibungsbelages am Stößel wird durch den Federdruck bestimmt.

Aufgabe der Erfindung ist es, einen Reibungsdämpfer so zu gestalten, daß bei der Fertigung des Gehäuses der Abstand der Reibflächen einstellbar ist.

Erfindungsgemäß ist die obige Aufgabe dadurch einen Reibungsdämpfer gemäß dem Anspruch 1 gelöst.

Günstig ist dabei, daß das für das Gehäuse an sich bekannte Rohr und dessen Nachbearbeitung entfällt. Vorteilhaft ist vor allem, daß im Fertigungsprozeß, speziell beim Verbinden der Gehäuseteile, der Abstand der Reibflächen an den jeweils vorgesehenen Stößel so angepaßt werden kann, daß im Betrieb die gewünschten Reibungskräfte entstehen. Der Reibungsdämpfer ist damit insbesondere hinsichtlich der Reibungskräfte toleranzarm herstellbar. Dies hat zur Folge, daß die nach dem Stand der Technik im Stößel angeordneten Spreizfedern im Regelfall entfallen können. Die Spreizfedern werden nur noch bei besonders hohen Anforderungen eingesetzt.

Ein weiterer Vorteil besteht darin, daß die nach außen stehenden Schenkel der U-förmigen Gehäuseteile in der Art von Kühlblechen die bei der Reibung entstehende Wärme abführen.

In bevorzugter Ausgestaltung ist an den U-förmigen Gehäuseteilen das Befestigungsauge des Gehäuses ausgeformt. Es ist damit nicht erforderlich, das Befestigungsauge als eigenes Bauteil an dem Gehäuse zu befestigen.

Weitere bevorzugte Ausgestaltungen der Erfindung ergeben sich aus den Unteransprüchen und der folgenden Beschreibung von Ausführungsbeispielen. In der Zeichnung zeigen:

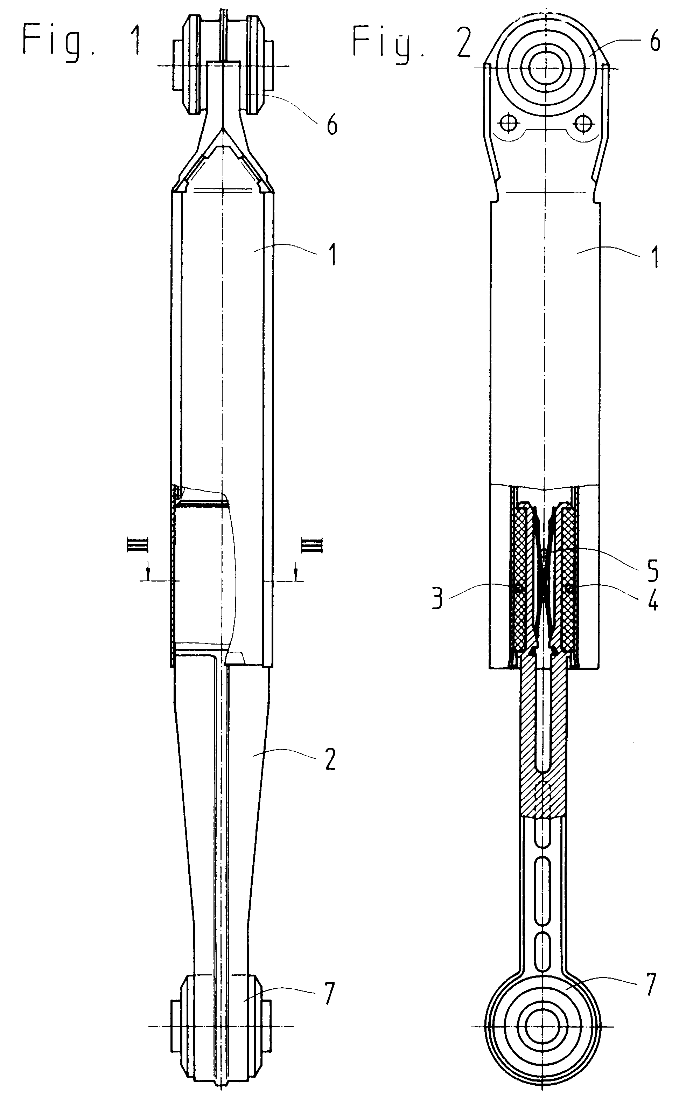

Figur 1 ein Reibungsdämpfer in Ansicht,
Figur 2 eine Aufsicht des Reibungsdämpfers nach Fig. 1,
Figur 3 einen Schnitt längs der Linie III-III nach Fig.1, dieser gegenüber vergrößert,
Figur 4 ein weiteres Ausführungsbeispiel in einer Fig. 3 entsprechenden Ansicht,
Figur 5 ein drittes Ausführungsbeispiel in einer Fig. 3 entsprechenden Ansicht,
Figur 6 ein viertes Ausführungsbeispiel in einer Fig. 3 entsprechenden Ansicht,
Figur 7 eine andere Ausgestaltung des Befestigungsauges des Gehäuses,
Figur 8 eine Teilansicht einer Gestaltung mit gewelltem Gehäuseteil,
Figur 9 ein weiteres Ausführungsbeispiel schematisch im Schnitt,
Figur 10 ein zusätzliches Ausführungsbeispiel schematisch im Schnitt und
Figur 11a bis f verschiedene Möglichkeiten der Verbindung der Gehäuseteile.

Der Reibungsdämpfer besteht aus einem Gehäuse(1), in dem ein Stößel(2) geführt ist. Der Stößel(2) trägt im Innern des Gehäuses(1) Reibbeläge(3,4). Innerhalb des Stößels(2) besteht ein Einbauraum(5) für Spreizfedern. Am Gehäuse(1) und am Stößel(2) ist jeweils ein Befestigungsauge(6,7) ausgebildet.

Das Gehäuse(1) besteht aus zwei U-förmigen Gehäuseteilen(8,9), die aus beispielsweise vorverzinktem Band gefertigt sind. An den Gehäuseteilen(8,9) ist jeweils die eine Hälfte des Befestigungsauges(6) ausgeformt.

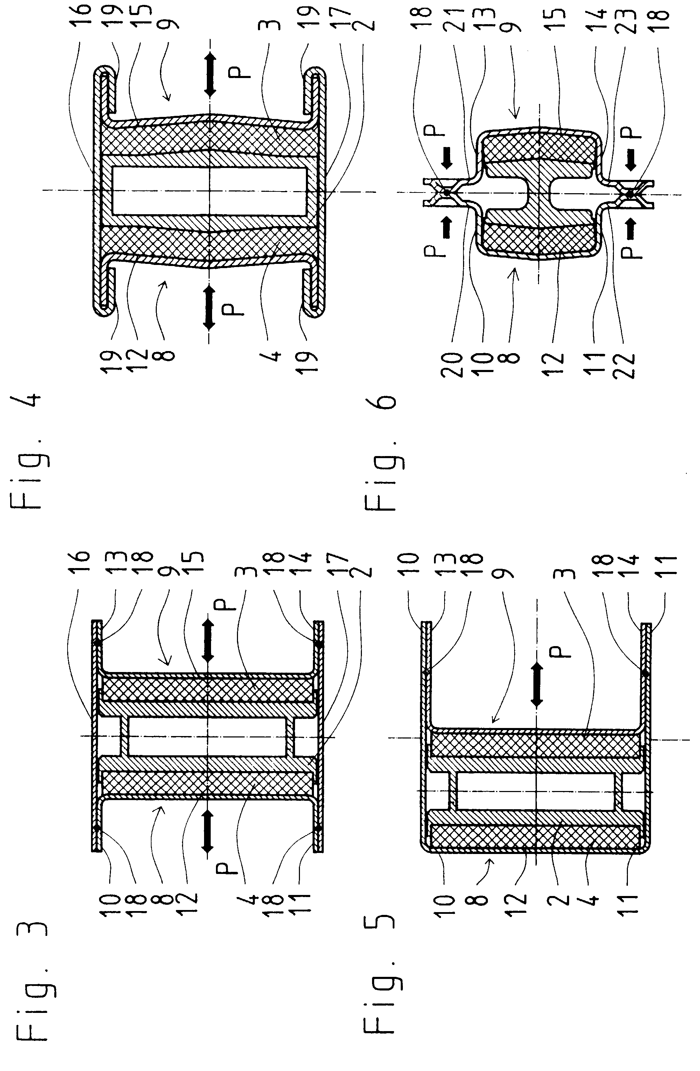

Das U-förmige Gehäuseteil(8) bildet zwei Schenkel(10,11), zwischen denen eine ebene, geknickte oder gewellte Basisfläche(12) besteht. Entsprechend bildet das Gehäuseteil(9) zwei Schenkel (13,14), zwischen denen eine ebene, geknickte oder gewellte Basisfläche(15) besteht. Die Basisflächen(12,15) sind die Reibflächen für die Reibbeläge(3,4) des Stößels(2) (vgl. Fig. 3,4,5,6,8).

Bei den Ausführungsbeispielen nach den Figuren 3 und 4 ragen die Schenkel(10,11,13,14) in entgegengesetzter Richtung nach außen. Zur Verbindung des Schenkels(10) mit dem Schenkel(13) ist ein Blechstreifen(16) vorgesehen. Zur Verbindung des Schenkels(11) mit dem Schenkel(14) ist ein Blechstreifen(17) vorgesehen.

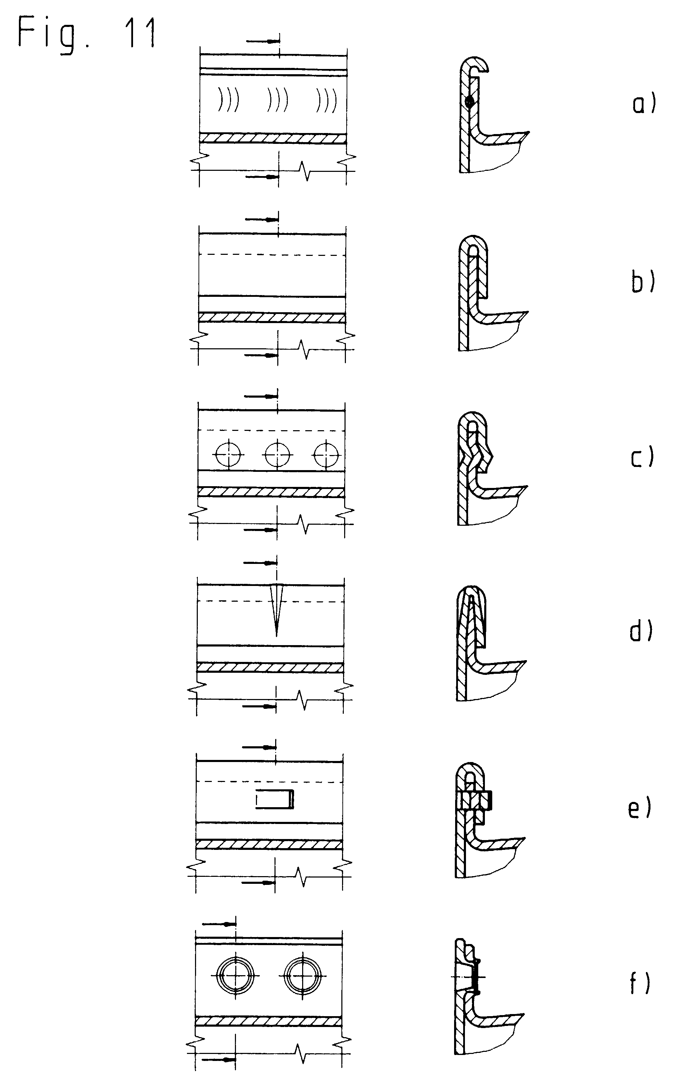

Die Schenkel(10 bis 14) sind mit den Blechstreifen(16,17) an Befestigungsstellen(18) (vgl. Fig. 3) verbunden. Die Befestigung kann durch Verschränken, Klemmen oder Punktschweißen erfolgen. Die Figur 11 zeigt solche Verbindungsmöglichkeiten.

Der Doppelpfeil(P) deutet an, daß das Gehäuseteil(9) vor dem Befestigen an dem Blechstreifen(16,17) mehr oder weniger tief zwischen die Blechstreifen(16,17) eingeschoben kann. Dadurch wird der Abstand zwischen den Basisflächen(12,15) so eingestellt, daß sie als Reibflächen die notwendige Kraft auf die Reibbeläge(3,4) ausüben.

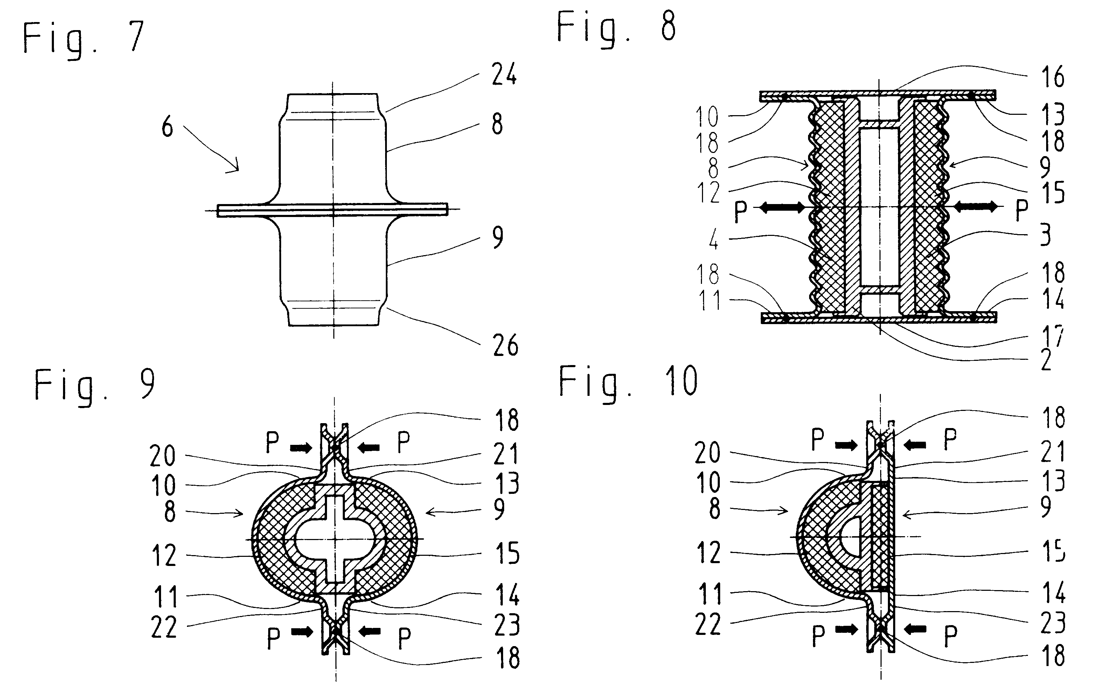

Beim Ausführungsbeispiel nach Figur 4 sind an den Blechstreifen(16,17) Bördelungen bzw. Umbiegungen(19) gezeigt. Diese übergreifen die Ränder der Schenkel(10,11,13,14). Nach Einstellen des notwendigen Abstandes zwischen den Basisflächen(12,15) werden die Bördelungen bzw. Umbiegungen(19) so festgeklemmt (vgl. Fig. 11), daß sich die U-förmigen Gehäuseteile(8,9) nicht mehr in Richtung der Doppelpfeile(P) bewegen können. Die Einstellung des Abstandes kann wahlweise durch Verschieben des Gehäuseteils(8) und/oder des Gehäuseteils(9) erfolgen. Bei der Ausführung nach Figur 4 sind die Basisflächen(12,15) und dementsprechend der Stößel(2) und die Reibbeläge(3,4) in Verschieberichtung leicht geknickt. Dies verbessert die Geradeführung des Stößels(2) im Gehäuse(1). Die Basisflächen(12,15) können jedoch auch anders gestaltet sein. Beispielsweise können sie wellig sein (vgl. Fig. 8), wobei hierbei die Reibbeläge(3,4) und der Stößel(2) plan wie in den Figuren 3, 5 und 6 ausgebildet sind.

Beim Ausführungsbeispiel nach Figur 5 ragen die Schenkel(10,11 bzw. 13,14) der beiden U-förmigen Gehäuseteile(8,9) in der gleichen Richtung nach außen. Die Schenkel(13,14) des Gehäuseteils(9) liegen innen an den Schenkeln(10,11) des Gehäuseteils(8) an. An den Befestigungsstellen(18) sind die Schenkel direkt miteinander, beispielsweise durch Durchdrückungen, Verschränkungen oder Punktverschweißungen, verbunden. Es könnten auch Umbiegungen entsprechend Figur 4 vorgesehen sein. Der Vorteil des Ausführungsbeispiels nach Figur 5 besteht darin, daß die Blechstreifen(16,17) überflüssig sind und damit weniger Befestigungsstellen(18) erforderlich sind.

Beim Ausführungsbeispiel nach Figur 6 sind die Schenkel(10,11) des Gehäuseteils(8) auf die Schenkel(13,14) des Gehäuseteils(9) gerichtet. An den Schenkeln sind Ausbiegungen(20 bis 23) vorgesehen, wobei die Ausbiegungen(20,21) und die Ausbiegungen(22,23) im Abstand voneinander stehen und an Befestigungsstellen(18) miteinander verbunden sind. Bei der Montage des Gehäuses(1) werden die Abstände zwischen den Ausbiegungen(20,21 bzw. 22,23) durch Zusammendrücken (bleibende Verformung) in Richtung der Pfeile(P) so eingestellt, daß die Basisflächen(12,15) im gewünschten Abstand stehen.

In Figur 7 ist eine weitere Gestaltung des Befestigungsauges(6) gezeigt. Dessen einer Bereich(24) ist am Gehäuseteil(8) und dessen anderer Bereich(26) ist am Gehäuseteil(9) ausgeformt. Dieses Befestigungsauge eignet sich zur Anbringung des Gehäuses(1) an einer Lagerungseinrichtung, wie sie in der Patentanmeldung P 43 20 232 beschrieben ist.

Bei der Ausführung nach Figur 9, die der Ausführung nach Figur 6 ähnlich ist, ist die U-Form der Gehäuseteile(8,9) teilkreisförmig oder teiloval gestaltet. Dadurch entstehen teilkreisförmige bzw. teilovale Reibflächen. Entsprechend teilkreisförmig bzw. teiloval sind die Reibbeläge(4,3) geformt. Die Gehäuseteile(8,9) sind an ihren Ausbiegungen(20,21 und 22,23) so miteinander verbunden, daß der gewünschte Abstand der Reibflächen entsteht. Dies kann beispielsweise ebenso wie bei Figur 6 geschehen. Es ist jedoch auch möglich, zwischen den Ausbiegungen(20,21 bzw. 22,23) Abstandhalter der geeigneten Dicke vorzusehen.

Figur 10 ist eine Ausführung entsprechend Figur 9; es wird deshalb auf obige Erläuterungen verwiesen. Bei Figur 10 ist jedoch das zweite Gehäuseteil(9) kein U-förmiges, sondern ein planes Teil. Dieses könnte auch gewellt sein (vgl. Fig. 8).

Die Figur 11 zeigt verschiedene Verbindungsmöglichkeiten, die bei den Ausführungsbeispielen nach den Figuren 3, 4, 5 verwendet werden können, wobei jeweils links eine Ansicht und rechts ein zugehöriger Schnitt dargestellt sind. Figur 11a zeigt eine Punktschweißung bzw. Rollnahtschweißung. In Figur 11b ist eine Bördelung dargestellt. Die Bördelung hat den Vorteil, daß keine scharfen Kanten freistehen. Figur 11c zeigt eine Bördelung mit punktweiser Verformung. In Figur 11d ist eine Bördelung mit stellenweiser Verquetschung gezeigt. Die Figur 11e zeigt eine Bördelung mit stellenweiser Verscherung. In Figur 11f ist eine druckknopfartige Durchdrückung (Toxen) dargestellt.

## Patentansprüche

1. Reibungsdämpfer mit einem Gehäuse das zwei Gehäuseteile aufweist und an dem Reibflächen für einen Reibbelag eines Stößels bestehen und an dem ein Befestigungsauge vorgesehen ist,
dadurch gekennzeichnet
daß jedes Gehäuseteil (8,9) eine der Reibflächen bildet derart, daß ihre Basisflächen (12,15) die Reibflächen für die Reibbeläge (3,4) des Stößels (2) sind und daß der Abstand der Gehaüseteile (8,9) und damit der Abstand der Reibflächen beim Verbinden der Gehäuseteile (8,9) entsprechend der gewünschten Reibung eingestellt ist

2. Reibungsdämpfer nach Anspruch 1
dadurch gekennzeichnet
daß die beiden Gehäuseteile (8,9) U-förmig ausgebildet sind und die beiden Schenkel der U-Form jeweils bezogen auf den Innenraum des Gehäuses (1) in entgegengesetzter Richtung nach außen ragen und paarweise mittels Blechstreifen (16,17) verbunden sind

3. Reibungsdämpfer nach Anspruch 2
dadurch gekennzeichnet
daß die Blechstreifen (16,17) mit wenigstens einer Umbiegung (19) wenigstens einen Rand eines Schenkels (10,11;13,14) der U-förmigrn Gehäuseteile übergreifen

4. Reibungsdämpfer nach einem der Ansprüche 2 oder 3
dadurch gekennzeichnet,
daß die Schenkel (10,11,13,14) der beiden U-förmigen Gehäuseteile (8,9) in gleicher Richtung nach außen ragen und die Schenkel (13,14) des einenGehäuseteil (9) innen an den Schenkeln (10,11) des anderen Gehäuseteil (8) anliegen und die Schenkel (10, 13;11,14) direkt miteinander verbunden sind.

5. Reibungsdämpfer nach Anspruch 1
dadurch gekennzeichnet,
daß die Schenkel (10,11;13,14) der beiden Gehäuseteile (8,9) aufeinander zugerichtet und an nach außen gerichteten Ausbiegungen (20 bis 23) miteinander verbunden sind

6. Reibungsdämpfer nach einen der vorhergehenden Ansprüche
dadurch gekennzeichnet,
daß die Schenkel (10,13;11,14) miteinander bezw. mit den Blechstreifen (16,17) durch Umbördeln mit Verformen ,Verquetschen oder Verscheren verbunden sind.

7. Reibungsdämpfer nach einem der vorhergehenden Ansprüche
dadurch gekennzeichnet,
daß die zwischen den Schenkeln (10,11 bzw. 13,14) bestehende Basisfläche (12;15) der beiden U-förmigen Gehäuseteile (8,9) als Reibfläche wellig oder eben ist

8. Reibungsdämpfer nach Anspruch 1
dadurch gekennzeichnet,
daß wenigstens eines der Gehäuseteile (8,9) teilkreisförmig oder teiloval oder V-förmig gestaltet ist

## Claims

1. A friction damper with a housing comprising two housing parts and on which there are friction surfaces for a friction lining of a push member and on which there is a fixing lug, characterised in that each housing part (8, 9) constitutes one of the friction surfaces so that its base surfaces (12, 15) are the friction surfaces for the friction linings (3, 4) of the push member (2) and in that the gap between the housing parts (8, 9) and thus the gap between the friction surfaces when the housing parts (8, 9) are joined is adapted in accordance with the friction desired.

2. A friction damper according to claim 1, characterised in that the two housing parts (8, 9) are U-shaped in construction and the two arms of the U-shape project outwardly in opposite directions respectively in relation to the interior of the housing (1) and are joined in pairs by metal strips (16, 17).

3. A friction damper according to claim 2, characterised in that the sheet metal strips (16, 17) have at least one bent-over part (19) engaging over an edge of an arm (10, 11; 13, 14) of the U-shaped housing parts.

4. A friction damper according to one of claims 2 or 3, characterised in that the arms (10, 11; 13, 14) of the two U-shaped housing parts (8, 99) project outwardly in the same direction, the arms (13, 14) of one housing part (9) bearing on the inside of the arms (10, 11) of the other housing part (8) while the arms (10, 13; 11, 14) are connected to each other directly.

5. A friction damper according to claim 1, characterised in that the arms (10, 11; 13, 14) of the two housing parts (8, 9) are directed towards each other and are connected to each other at outwardly directed outwardly bent parts (20 to 23).

6. A friction damper according to one of the preceding claims, characterised in that the arms (10, 13; 11, 14) are connected to one another or alternatively to the sheet metal strips (16, 17) by being flanged over, accompanied by a shape-changing, squeezing or cutting process.

7. A friction damper according to one of the preceding claims, characterised in that the base area (12, 15) of the two U-shaped housing parts (8, 9) which exists between the arms (10, 11; 13, 14) is, as a friction surface, undulating or plane.

8. A friction damper according to claim 1, characterised in that at least one of the housing parts (8, 9) is partly circular or partly oval or V-shaped in form.

## Revendications

1. Amortisseur à friction, comportant un boîtier qui présente deux parties de boîtier et sur lequel sont prévus des surfaces de friction pour une garniture de friction d'un coulisseau et un oeillet de fixation,
caractérisé en ce que chaque partie de boîtier (8,9) forme une des surfaces de friction de sorte que leurs surfaces de base (12,15) sont les surfaces de friction pour les garnitures de friction (3,4) du coulisseau (2), et que l'écartement des parties de boîtier (8,9) et, ainsi, l'écartement des surfaces de friction, lors de la liaison des parties de boîtier (8,9), sont réglés de façon correspondant à la friction souhaitée.

2. Amortisseur à friction selon la revendication 1,
caractérisé en ce que les deux parties de boîtier (8,9) sont réalisées en forme de U et les deux branches de la forme en U sont orientées à chaque fois vers l'extérieur en directions opposées relativement à l'espace interne du boîtier (1) et sont reliées par paire au moyen de rubans de tôle (16,17).

3. Amortisseur à friction selon la revendication 2,
caractérisé en ce que les rubans de tôle (16,17), par au moins un recourbement (19), enveloppent au moins un bord d'une branche (10,11; 13,14) des parties de boîtier en forme de U.

4. Amortisseur à friction selon une des revendications 2 ou 3,
caractérisé en ce que les branches (10,11 ; 13,14) des deux parties de boîtier (8,9) en forme de U sont orientées vers l'extérieur dans la même direction et les branches (13,14) d'une partie de boîtier (9) se trouvent intérieurement contre les branches (10,11) de l'autre partie de boîtier (8) et les branches (10,13; 11,14) sont reliées directement les unes aux autres.

5. Amortisseur à friction selon la revendication 1,
caractérisé en ce que les branches (10,11; 13,14) des deux parties de boîtier (8,9) sont orientées les unes vers les autres et sont reliées ensemble sur des cintrages (20 à 23) orientés vers l'extérieur.

6. Amortisseur à friction selon une des revendications précédentes,
caractérisé en ce que les branches (10,13; 11,14) sont reliées ensemble ou avec les rubans de tôle (16,17) par rabattement avec déformation, sertissage ou cisaillement.

7. Amortisseur à friction selon une des revendications précédentes,
caractérisé en ce que la surface de base (12;15), existant entre les deux branches (10,11 ou 13,14), des deux parties de boîtier (8,9) en forme de U est ondulée ou plane comme surface de friction.

8. Amortisseur à friction selon la revendication 1,
caractérisé en ce qu'au moins une des parties de boîtier (8,9) est réalisée sous forme d'arc de cercle ou de façon partiellement ovale ou en forme de V.
